# EUROPEAN PATENT SPECIFICATION

(11) **EP 4 556 315 B1**
(45) Date of publication and mention of the grant of the patent: **19.08.2026**
(21) Application number: 23210975.1
(22) Date of filing: 20.11.2023
(51) Int. Cl.: B60Q 3/64, B60Q 3/14, B60R 13/02

(54) **METHOD FOR ATTACHING AN ILLUMINATION DEVICE AT A TEXTILE, TEXTILE FOR AN INTERIOR PART OF A VEHICLE COMPRISING AN ILLUMINATION DEVICE**
VERFAHREN ZUM BEFESTIGEN EINER BELEUCHTUNGSVORRICHTUNG AN EINEM TEXTIL, TEXTIL FÜR EIN FAHRZEUGINNENTEIL MIT EINER BELEUCHTUNGSVORRICHTUNG
PROCÉDÉ DE FIXATION D'UN DISPOSITIF D'ÉCLAIRAGE SUR UN TEXTILE, TEXTILE POUR UNE PARTIE INTÉRIEURE D'UN VÉHICULE COMPRENANT UN DISPOSITIF D'ÉCLAIRAGE

(43) Date of publication of application: 21.05.2025
(73) Proprietor: Motherson Innovations Company Limited, London E14 5HU (GB)
(72) Inventor: PIGNARD, Pierre, 68320 Jebsheim (FR); SEHN, Fabian, 79100 Freiburg (DE)
(74) Representative: Westphal, Mussgnug & Partner Patentanwälte mbB

(56) References cited:
- EP-A1- 3 421 877
- JP-A- 2023 097 628
- KR-B1- 101 169 226
- US-A1- 2017 217 366
- US-A1- 2018 339 650
- US-A1- 2019 009 709

## Description

The present invention relates to a method for attaching an illumination device at a textile, a textile for an interior part of a vehicle comprising an illumination device, an interior part comprising such a textile and a vehicle having such an interior part and/or such a textile.

Ambient lighting is a key feature of modern vehicles by which the appearance of a passenger compartment can be set individually. Lighting the passenger compartment is becoming an important part of the design leading to an increase of the passenger comfort. The illumination devices providing the lighting can be arranged in manifold locations of interior parts of modern vehicles that are visible from the passenger compartment. Examples of such interior parts are instrument panels, door panels, center consoles, headliner and vehicle seats.

The respective layout of illuminated interior parts comprises an illumination body, for example in form of an illuminated textile, that is visible from the passenger compartment. At least one light source, typically embodied as a light emitting diode (LED), is typically arranged at distance from the illumination body. The light provided by the light source is transmitted to the illumination body by optical fibers having a first end and a second end. At least one optical fiber is arranged in a protective sheath having a first end and a second end, the first end of the optical fiber protruding over the first end of the protective sheath. Thus the optical fibers may couple the light into the illumination body at the part protruding over the first end of the protective sheath.

Typically the first end of the protective sheaths is arranged at a rim of the textile to be illuminated, and the at least one optical fiber protrudes over the first end of the protective sheath and extends into the textile. In case several optical fibers are arranged in the protective sheath, these optical fibers fan out at the first end of the protective sheath, thereby forming a fiber delta. The fiber delta usually is arranged close to the rim of the textile to be illuminated. The optical fibers further extend into the textile. To attach the illumination device at the textile it is known to laminate a soft layer on the back side of the textile in order to get a soft touch. The fiber delta is supposed to be protected between the textile and the soft layer. Problems might arise in case the area between the textile and the soft layer is too small or in case some optical fibers inadvertently are arranged outside of the textile geometry, because in these cases optical fibers are exposed on the edge or rim of the textile and might be damaged.

US 2017/217366 A1 discloses a component for a vehicle interior with optical fibers arranged in a fabric, a light source coupled to the fibers via an interface and a transparent protective layer.

Therefore, an embodiment of the present invention has the object to provide an illumination device that improves the situation described above. In particular, the invention seeks to provide a method for attaching an illumination device at a textile by which damage of optical fibers of the illumination device can be avoided.

The task is solved by the features specified in claims 1, 10, 15 and 16. Advantageous embodiments are the subject of the dependent claims.

An embodiment of the invention is directed to a method for attaching an illumination device at a textile, the illumination device comprising a protective sheath with a first end and a second end, at least one optical fiber being guided in the protective sheath, the optical fiber comprising a first end protruding over the first end of the protective sheath, the method comprising the steps of
- providing a textile comprising a front side and a back side,
- folding the textile along a fold line such that the first end of the protective sheath is covered.

According to the present invention the textile is folded along a fold line such that the first end of the protective sheath is covered. Therefore, the first end of the protective sheath is protected in a foldover. The optical fibers are prevented from being arranged outside the textile geometry because they are kind of caught in the foldover.

According to an embodiment, the textile comprises at least one cut-out, and the protective sheath is threaded through the cut-out before folding the textile along the fold line. The cut-out enhances protection of the first end of the protective sheath because the protective sheath might be arranged perpendicular to the rim of the folded textile.

According to an embodiment the fold line crosses the cut-out. This enables the protective sheath after folding of the textile passing through the cut-out without being bent.

In a further embodiment the protective sheath comprises several optical fibers fanning out at the first end of the protective sheath, thereby forming a fiber delta, wherein the textile is folded along the fold line such that the fiber delta is covered. Especially when having several optical fibers the danger of one of the fibers moving outside the geometry of the textile is larger, and by covering the fiber delta this danger can be eliminated.

In a preferred embodiment the method further comprises the step of
- fixing the folded textile by means of at least one fixing device.

By fixing the folded textile by means of at least one fixing device the fold is prevented from inadvertent opening, especially during subsequent handling or processing, for example when attaching a back layer.

According to an embodiment the fixing device is placed perpendicular to the front side of the textile. Especially, the fixing device can be arranged in a machine or tool for attaching an illumination device at a textile and can further be used as positioning means for the textile within the device.

The fixing device might be embodied as a pin, a bolt, or a pin or a bolt with a thickened end. A pin or a bold are easy to guide through the textile. The thickened end can enhance protection from the fold being opened inadvertently.

According to an embodiment, the fixing device might be spring-loaded by a spring element and retractable against the spring element. Thus the fixing device can sink into the machine or the tool and does not disturb the production process. According to a further embodiment, the method further comprises the step of
- lamination of a soft layer on the back side of the textile. The soft layer on the back side of the textile might enhance stability of the textile and protect the optical fibers arranged on the back side of the textile. The soft layer can be embodied for example as a foam layer or a 3d spacer fabric or similar.

An embodiment of the invention is directed to a textile for an interior part of a vehicle, comprising at least one illumination device, the illumination device comprising a light source and a protective sheath with a first end and a second end, at least one optical fiber being guided in the protective sheath, the optical fiber comprising a first end protruding over the first end of the protective sheath, wherein the textile is folded along a fold line such that the first end of the protective sheath is covered.

In an embodiment, the textile comprises at least one cut-out, the protective sheath being threaded through the cut-out before the textile being folded.

The technical effects and advantages as discussed with regard to the present method equally apply to the textile. Briefly, the optical fibers are prevented from being arranged outside the textile geometry because they are kind of caught in the foldover.

According to another embodiment of the textile, the fold line crosses the cut-out. This enables the protective sheath after folding of the textile passing through the cut-out without being bent.

In a further embodiment of the textile the protective sheath comprises several optical fibers fanning out at the first end of the protective sheath, thereby forming a fiber delta, and wherein the textile is folded along the fold line such that the fiber delta is covered. Especially when having several optical fibers the danger of one of the fibers moving outside the geometry of the textile is larger, and by covering the fiber delta this danger can be eliminated.

According to an embodiment of the textile a soft layer is laminated on the back side of the textile, especially over the folded part of the textile. The soft layer can be embodied for example as a foam layer or a 3d spacer fabric or similar.

The soft layer on the back side of the textile might enhance stability of the textile and protect the optical fibers arranged on the back side of the textile. In case the soft layer covers the folded part, the soft layer prevents the fold from inadvertent opening after possible fixing devices are removed.

Another implementation of the invention is directed to an interior part for a vehicle, comprising a textile according to one of the embodiments previously described. Another embodiment of the invention is directed to a vehicle comprising at least one interior part according to one of the embodiments previously described and/or at least one textile according to one of the embodiments previously described.

The technical effects and advantages as discussed with regard to the present textile equally apply to the interior part and the vehicle. Briefly, the optical fibers are prevented from being arranged outside the textile geometry and being damaged.

The present disclosure is described in detail with reference to the drawings attached wherein
- Figure 1: is a principle back view of a textile with an illumination device before folding,
- Figure 2: is a principle back view of a textile with an illumination device after folding,
- Figure 3: is the view of the textile according to figure 2 together with a soft layer,
- Figure 4: is the textile according to figure 2 with the soft layer attached,
- Figure 5: is a sectional view along line A-A in figure 4 and an enlarged view of a detail of this sectional view,
- Figure 6: is a sectional view along line B-B in figure 4 and an enlarged view of a detail of this sectional view,
- Figure 7: is the textile according to figure 4 layed into a tool used for the step of attaching the soft layer.,
- Figure 8: is a sectional view along line C-C in figure 7,
- Figure 9: is a sectional view along line D-D in figure 7,
- Figure 10a: is a sectional view of the textile according to figure 1 during process of folding using a fixing device according to a first embodiment,
- Figure 10b: is the textile according to figure 10a in which the folded part is fixed with the fixing device,
- Figure 10c: is the textile according to figure 10b with a soft layer laminated on the back side of the textile,
- Figure 11a: is a sectional view of the textile according to figure 1 during process of folding using a fixing device according to a second embodiment,
- Figure 11b: is the textile according to figure 11a in which the folded part is fixed with the fixing device,
- Figure 11c: is the textile according to figure 11b with a soft layer laminated on the back side of the textile, and
- Figure 12: is a principle top view of a vehicle comprising a plurality of interior parts.

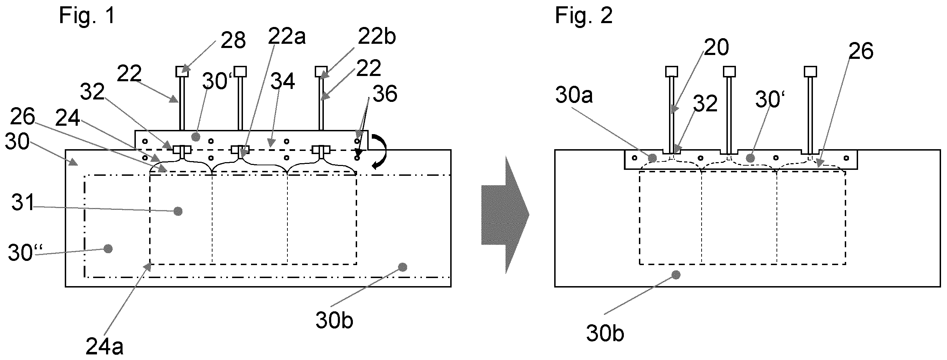

Figures 1 to 11 show an embodiment of a textile 30 to which at least one illumination device 20 is to be attached according to the present invention. It is possible to attach several illumination devices 20. The illustrated embodiment shows three illuminations devices 20.

The illumination device 20 comprises a protective sheath 22 with a first end 22a and a second end 22b. The protective sheath 22 may be embodied as a hollow flexible tube. At least one optical fiber 24, preferably several optical fibers 24, is guided in the protective sheath 22. The optical fiber 24 comprises a first end 24a protruding over the first end 22a of the protective sheath 22. In case of several optical fibers 24 being arranged in the protective sheath 22, the optical fibers 24 fan out when leaving at the first end 22a of the protective sheath 22, thereby forming a so-called fiber delta 26.

At the second end 22b of the protective sheath 22, the optical fibers 24 can be connected to a light source 28, for example an LED module, especially by means of a respective connection device. The light source 28 can be arranged at a suitable place within the vehicle 11 distant from the textile 30 to be illuminated.

The part of the optical fiber 24 protruding over the first end 22a of the protective sheath 22 can be arranged at or within the textile 30 to illuminate an area 31 of the textile 30.

The textile 30 comprises a front side 30a, a back side 30b and preferably at least one cut-out 32. Especially, there is one single cut-out 32 for each illumination device 20 to be attached. The cut-out 32 might for example be rectangular and should be of a size such that the protective sheath 22 can easily be thread through. The cut-out 32 preferably is arranged in proximity to the rim of the textile 20.

For attaching the illumination device 20 at the textile 30, the protective sheath 22 is threaded through the cut-out 32 (see figure 1). Especially, the protective sheath 22 is threaded through the cut-out 32 such that the first end 22a of the protective sheath 22 and the part of the optical fiber 24 protruding from the protective sheath 22 are located on the back side 30b of the textile. Afterwards the textile 30 is folded along a fold line 34 such that the first end 22a of the protective sheath 22 is covered. Especially, the fiber delta 26 is covered (see figure 2).

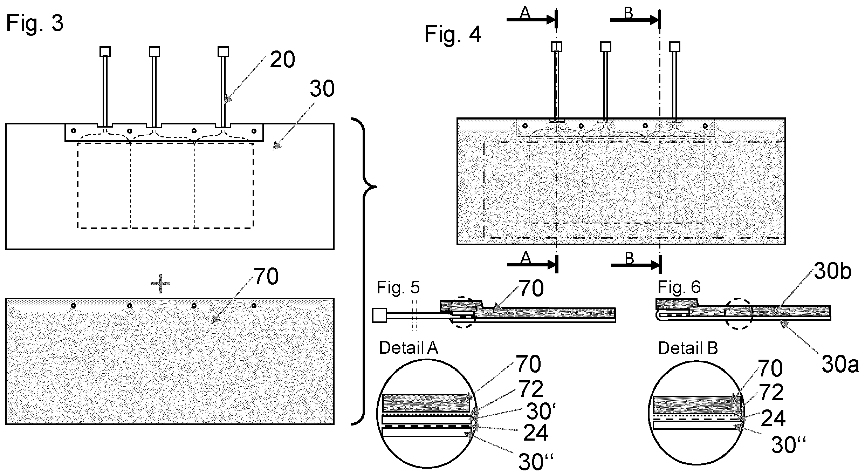

Thus the first end 22a of the protective sheath 22 and the fiber delta 26 are arranged between two layers of the textile 30, especially the folded part 30' and the remaining part 30" of the textile 30 (see especially figure 5, 8, and 9). The fiber delta 26 is prevented from being located outside the geometry to be used for further processing by being caught by the foldover at the fold line 34 (see for example figures 2 and 6).

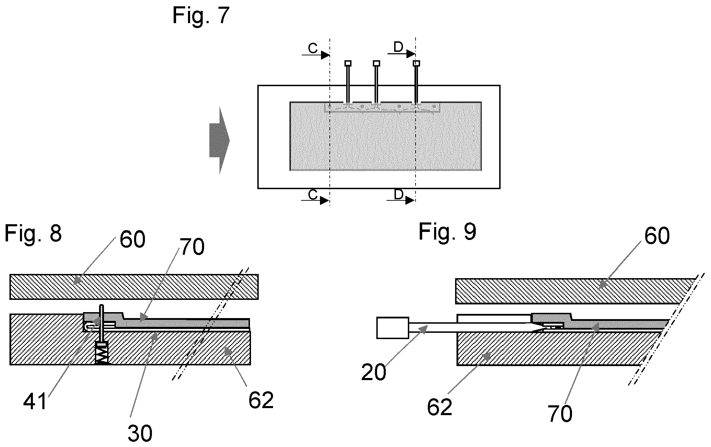

In the embodiment illustrated the fold line 34 crosses the cut-out 32. Thus the protective sheath 22 can pass the cut-out 32 without being bent (see figures 5 and 9).

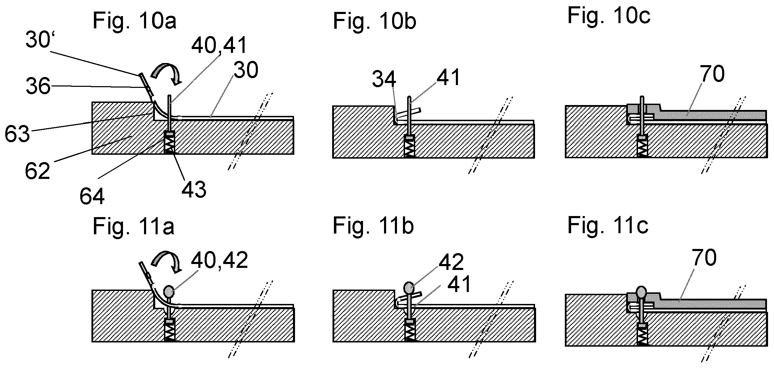

When folding the textile 30, the folded textile 30 may be fixed by means of at least one fixing device 40. The fixing device 40 may be embodied as a pin 41 or a bolt (see figures 10a to 10c), or as a pin 41 or a bolt with a thickened end 42 (see figures 11a to 11c). The thickened end 42 may be embodied as a ball-like structure, a cone-like structure or similar.

Processing of the textile 30 usually takes place in a machine comprising an upper tool 60 and a lower tool 62. The upper tool might be embodied as a 2D or 3D upper tool. The textile 30 with the illumination device 20 threaded through the cut-out 32 can be positioned on the lower tool 62, especially with the fold line 34 positioned at a step 63 of the lower tool 62. Part of the textile 30 will inflect over the step 63 and can be folded at the fold line 34 (see figures 10a and 11a).

The fixing device 40 might be arranged at the lower tool 62, preferably in a hole 64, especially a blind hole 64, with a spring element 43 underneath. Thus, the fixing device 40 is preferably retractable while the upper tool 60 is pushing on the fixing device 40. The textile 30 may comprise fixing holes 36, especially two fixing holes 36 per illumination device 20. Preferably, the two fixing holes 36 are arranged on different sides of the fold line 34. When positioned on the lower tool 62, the fixing device 40 may be threaded through one of the fixing holes 36 (see for example figures 10a and 11a). The fixing device 40 may be placed perpendicular to the front side 30a of the textile 30. When folded, the fixing device 40 can be threaded through the other one of the fixing holes 36, which is located in the folded part 30' of the textile (see figures 10b and 11b). The fixing device 40 prevents the folded part 30' from inadvertent opening or flapping back.

After the textile 30 is folded along the fold line 34, a soft layer 70 may be laminated on the back side 30b of the textile 30 (see for example figures 10c and 11c or figures 3 to 6). The soft layer 70 can be embodied for example as a foam layer or a 3d spacer fabric or similar. In case a fixing device 40 is used, the fixing device 40 may keep the folded part 30' in place for the step of attaching a soft layer 70. The soft layer 70 may be attached to the textile 30 by means of an adhesive 72 which is preferably applied on the soft layer 70. To attach the soft layer 70, the upper tool 60 is moved towards the lower tool 62 to press the textile 30 and the soft layer 70 in between. In case a fixing device 40 is used, the fixing device 40 can be pressed in the hole 64 against the force of the spring element 43. The soft layer 70 covers the folded part 30' and keeps it in place.

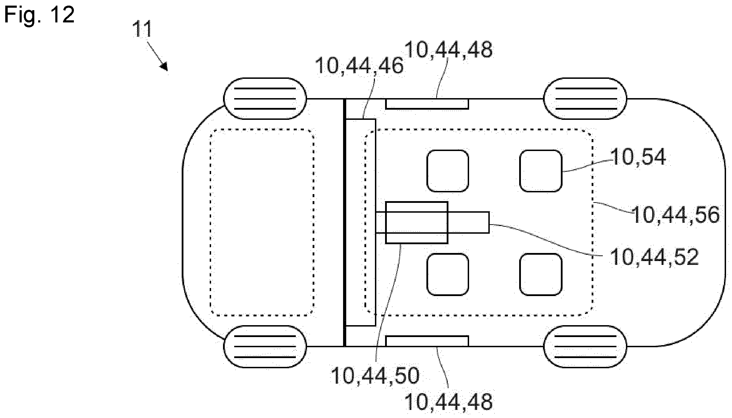

Figure 12 shows a vehicle 11 by means of a principle top view, the vehicle 11 comprising several interior parts 10 comprising a textile 30 as previously discussed. The interior parts 10 of the vehicle 11 shown in Figure 12 may be embodied as an interior trim part 44 such as an instrument panel 46, a door panel 48, a center console 50, an overhead console 52, and headliners 56. Moreover, the interior parts 10 may be embodied as vehicle seats 54.

### Reference list

- 10: interior part
- 11: vehicle
- 20: illumination device
- 22: protective sheath
- 22a: first end
- 22b: second end
- 24: optical fiber
- 24a: first end
- 26: fiber delta
- 28: light source
- 30: textile
- 30': folded part
- 30": remaining part
- 30a: front side
- 30b: back side
- 31: area
- 32: cut-out
- 34: fold line
- 36: fixing hole
- 40: fixing device
- 41: pin
- 42: thickened end
- 43: spring element
- 44: interior trim part
- 46: instrument panel
- 48: door panel
- 50: center console
- 52: overhead console
- 54: vehicle seat
- 56: headliner
- 60: upper tool
- 62: lower tool
- 63: step
- 64: hole
- 70: soft layer
- 72: adhesive

## Claims

1. Method for attaching an illumination device (20) at a textile (30), the illumination device (20) comprising a protective sheath (22) with a first end (22a) and a second end (22b), at least one optical fiber (24) being guided in the protective sheath (22), the optical fiber (24) comprising a first end (24a) protruding over the first end (22a) of the protective sheath (22), the method comprising the steps of
- providing a textile (30) comprising a front side (30a) and a back side (30b)
- folding the textile (30) along a fold line (34) such that the first end (22a) of the protective sheath (22) is covered.

2. Method according to claim 1, wherein the textile (30) comprises at least one cut-out (32), and the protective sheath (22) is threaded through the cut-out (32) before folding the textile (30) along the fold line(34).

3. Method according to claim 2, wherein the fold line (34) crosses the cut-out (32).

4. Method according to one of the preceeding claims, wherein the protective sheath (22) comprises several optical fibers (24) fanning out at the first end (22a) of the protective sheath (22), thereby forming a fiber delta (26), and wherein the textile (30) is folded along the fold line (34) such that the fiber delta (26) is covered.

5. Method according to one of the preceding claims, further comprising the step of
- fixing the folded textile (30) by means of at least one fixing device (40).

6. Method according to claim 5, wherein the fixing device (40) is placed perpendicular to the front side (30a) of the textile (30).

7. Method according to claim 5 or 6, wherein the fixing device (40) is a pin (41), a bolt, or a pin or a bolt with a thickened end (42).

8. Method according to one of claims 5 to 7, wherein the fixing device (40) is spring-loaded by a spring element (43) and retractable against the spring element (43).

9. Method according to one of the preceding claims, further comprising the step of
- lamination of a soft layer (70), preferably a foam layer, on the back side (30b) of the textile (30).

10. Textile for an interior part (10) of a vehicle (11), comprising at least one illumination device (20), the illumination device (20) comprising a protective sheath (22) with a first end (22a) and a second end (22b), at least one optical fiber (24) being guided in the protective sheath (22), the optical fiber (24) comprising a first end (24a) protruding over the first end (22a) of the protective sheath (22),
wherein the textile (30) is folded along a fold line (34) such that the first end (22a) of the protective sheath (22) is covered.

11. Textile according to claim 10, wherein the textile (30) comprises at least one cut-out (32), the protective sheath (22) being threaded through the cut-out (32) before the textile (30) is folded.

12. Textile according to claim 10 or 11, wherein the fold line (34) crosses the cut-out (32).

13. Textile according to one of claims 10 to 12, wherein the protective sheath (22) comprises several optical fibers (24) fanning out at the first end (22a) of the protective sheath (22) thereby forming a fiber delta (26), and wherein the textile (30) is folded along the fold line (34) such that the fiber delta (26) is covered.

14. Textile according to one of claims 10 to 13, wherein a soft layer (70), preferably a foam layer, is laminated on the back side (30b) of the textile (30), especially over the folded part (30') of the textile (30).

15. Interior part (10) for a vehicle (11), comprising a textile (30) according to one of claims 10 to 14.

16. Vehicle (11), comprising at least one interior part (10) according to claim 15 and/or at least one textile (30) according to one of the claims 10 to 14.

## Patentansprüche

1. Verfahren zum Befestigen einer Beleuchtungsvorrichtung (20) an einem Textil (30), wobei die Beleuchtungsvorrichtung (20) eine Schutzhülle (22) mit einem ersten Ende (22a) und einem zweiten Ende (22b) aufweist, wobei zumindest eine optische Faser (24) in der Schutzhülle (22) geführt wird, wobei die optische Faser (24) ein erstes Ende (24a), das über das erste Ende (22a) der Schutzhülle (22) vorsteht, aufweist, wobei das Verfahren die folgenden Schritte aufweist:
- Bereitstellen eines Textils (30), das eine Vorderseite (30a) und eine Rückseite (30b) aufweist
- Falten des Textils (30) entlang einer Faltlinie (34) derart, dass das erste Ende (22a) der Schutzhülle (22) abgedeckt wird.

2. Verfahren nach Anspruch 1, wobei das Textil (30) zumindest einen Ausschnitt (32) aufweist und die Schutzhülle (22) vor dem Falten des Textils (30) entlang der Faltlinie (34) durch den Ausschnitt (32) gefädelt wird.

3. Verfahren nach Anspruch 2, wobei die Faltlinie (34) den Ausschnitt (32) kreuzt.

4. Verfahren nach einem der vorstehenden Ansprüche, wobei die Schutzhülle (22) mehrere optische Fasern (24) aufweist, die sich am ersten Ende (22a) der Schutzhülle (22) fächerförmig ausbreiten und dabei ein Faserdelta (26) bilden, und wobei das Textil (30) entlang der Faltlinie (34) so gefaltet wird, dass das Faserdelta (26) abgedeckt wird.

5. Verfahren nach einem der vorstehenden Ansprüche, das weiterhin den folgenden Schritt aufweist:
- Befestigen des gefalteten Textils (30) mittels zumindest einer Befestigungseinrichtung (40).

6. Verfahren nach Anspruch 5, wobei die Befestigungseinrichtung (40) senkrecht zur Vorderseite (30a) des Textils (30) angeordnet wird.

7. Verfahren nach Anspruch 5 oder 6, wobei die Befestigungsvorrichtung (40) ein Stift (41), ein Bolzen oder ein Stift oder ein Bolzen mit einem verdickten Ende (42) ist.

8. Verfahren nach einem der Ansprüche 5 bis 7, wobei die Befestigungsvorrichtung (40) durch ein Federelement (43) federbelastet und gegen das Federelement (43) zurückziehbar ist.

9. Verfahren nach einem der vorstehenden Ansprüche, das weiterhin den Schritt folgenden Schritt aufweist:
- Laminierung einer weichen Schicht (70), vorzugsweise einer Schaumschicht, auf die Rückseite (30b) des Textils (30).

10. Textil für ein Innenteil (10) eines Fahrzeugs (11), das zumindest eine Beleuchtungsvorrichtung (20) aufweist, wobei die Beleuchtungsvorrichtung (20) eine Schutzhülle (22) mit einem ersten Ende (22a) und einem zweiten Ende (22b) aufweist, wobei zumindest eine optische Faser (24) in der Schutzhülle (22) geführt ist, wobei die optische Faser (24) ein erstes Ende (24a), das über das erste Ende (22a) der Schutzhülle (22) vorsteht, aufweist, wobei das Textil (30) entlang einer Faltlinie (34) so gefaltet ist, dass das erste Ende (22a) der Schutzhülle (22) abgedeckt ist.

11. Textil gemäß Anspruch 10, wobei das Textil (30) zumindest einen Ausschnitt (32) aufweist, wobei die Schutzhülle (22) durch den Ausschnitt (32) geführt ist, bevor das Textil (30) gefaltet wird.

12. Textil gemäß Anspruch 10 oder 11, wobei die Faltlinie (34) den Ausschnitt (32) kreuzt.

13. Textil gemäß einem der Ansprüche 10 bis 12, wobei die Schutzhülle (22) mehrere optische Fasern (24) aufweist, die sich am ersten Ende (22a) der Schutzhülle (22) fächerförmig ausbreiten und dabei ein Faserdelta (26) bilden, und wobei das Textil (30) entlang der Faltlinie (34) so gefaltet ist, dass das Faserdelta (26) abgedeckt ist.

14. Textil gemäß einem der Ansprüche 10 bis 13, wobei eine weiche Schicht (70), vorzugsweise eine Schaumschicht, auf die Rückseite (30b) des Textils (30), insbesondere über den gefalteten Teil (30') des Textils (30), laminiert ist.

15. Innenteil (10) für ein Fahrzeug (11), das ein Textil (30) gemäß einem der Ansprüche 10 bis 14 aufweist.

16. Fahrzeug (11), das zumindest ein Innenteil (10) gemäß Anspruch 15 und/oder zumindest ein Textil (30) gemäß einem der Ansprüche 10 bis 14 aufweist.

## Revendications

1. Procédé de fixation d'un dispositif (20) d'éclairage à un textile (30), le dispositif (20) d'éclairage comprenant une gaine (22) protectrice ayant une première extrémité (22a) et une seconde extrémité (22b), au moins une fibre (24) optique passant dans la gaine (22) protectrice, la fibre (24) optique comprenant un premier bout (24a) faisant saillie de la première extrémité (22a) de la gaine (22) protectrice, le procédé comprenant les stades de
- se procurer un textile (30) comprenant une face (30a) avant et une face (30b) arrière,
- plier le textile (30) suivant une ligne (34) de pliage de manière à recouvrir la première extrémité (22a) de la gaine (22) protectrice.

2. Procédé suivant la revendication 1, dans lequel le textile (30) comprend au moins une découpe (32) et la gaine (22) protectrice est enfilée dans la découpe (32) avant de plier le textile (30) suivant la ligne (34) de pliage.

3. Procédé suivant la revendication 2, dans lequel la ligne (34) de pliage coupe la découpe (32).

4. Procédé suivant l'une des revendications précédentes, dans lequel la gaine (22) protectrice comprend plusieurs fibres (24) optiques sortant en éventail à la première extrémité (22a) de la gaine (22) protectrice, en formant ainsi un delta (26) de fibres et dans lequel le textile (30) est plié suivant la ligne (34) de pliage de manière à recouvrir le delta (26) de fibres.

5. Procédé suivant l'une des revendications précédentes, comprenant en outre le stade de
- fixer le textile (30) plié au moyen d'un dispositif (40) de fixation.

6. Procédé suivant la revendication 5, dans lequel le dispositif (40) de fixation est placé perpendiculairement à la face (30a) avant du textile (30).

7. Procédé suivant la revendication 5 ou 6, dans lequel le dispositif (40) de fixation est une goupille (41), un boulon ou une goupille ou un boulon ayant une extrémité (42) épaissie.

8. Procédé suivant l'une des revendications 5 à 7, dans lequel le dispositif (40) de fixation est soumis à l'action d'un ressort par un élément (43) de ressort et rétractable à l'encontre de l'élément (43) de ressort.

9. Procédé suivant l'une des revendications précédentes, comprenant en outre le stade de
- laminage d'une couche (70) souple, de préférence d'une couche de mousse, sur la face (30b) arrière du textile (30).

10. Textile pour une partie (10) intérieure d'un véhicule (11), comprenant au moins un dispositif (20) d'éclairage, le dispositif (20) d'éclairage comprenant une gaine (22) protectrice ayant une première extrémité (22a) et une seconde extrémité (22b), au moins une fibre (24) optique, passant dans la gaine (22) protectrice, la fibre (24) optique comprenant un premier bout (24a) faisant saillie de la première extrémité (22a) de la gaine (22) protectrice, dans lequel le textile (30) est plié suivant une ligne (34) de pliage de manière à recouvrir la première extrémité (22a) de la gaine (22) protectrice.

11. Textile suivant la revendication 10, dans lequel le textile (30) comprend au moins une découpe (32), la gaine (22) protectrice étant enfilée dans la découpe (32) avant que le textile (30) ne soit plié.

12. Textile suivant la revendication 10 ou 11, dans lequel la ligne (34) de pliage passe dans la découpe (32).

13. Textile suivant l'une des revendications 10 à 12, dans lequel la gaine (22) protectrice comprend plusieurs fibres (24) optiques sortant en éventail à la première extrémité (22a) de la gaine (22) protectrice, en formant ainsi un delta (26) de fibres et dans lequel le textile (30) est plié suivant la ligne (34) de pliage de manière à recouvrir le delta (26) de fibres.

14. Textile suivant l'une des revendications 10 à 13, dans lequel une couche (70) souple, de préférence une couche de mousse, est laminée sur la face (30b) arrière du textile (30), en particulier sur la partie (30') pliée du textile (30).

15. Partie (10) intérieure pour un véhicule (11), comprenant un textile (30) suivant l'une des revendications 10 à 14.

16. Véhicule (11), comprenant au moins une partie (10) intérieure suivant la revendication 15 et/ou au moins un textile (30) suivant l'une des revendications 10 à 14.
